# EUROPEAN PATENT APPLICATION

(11) **EP 3 499 348 A1**
(43) Date of publication of application: **19.06.2019**
(21) Application number: 17841386.0
(22) Date of filing: 03.08.2017
(51) Int. Cl.: G06F 3/041, G06F 3/044

(54) **SENSOR, INPUT DEVICE AND ELECTRONIC DEVICE**

(30) Priority: 15.08.2016 JP 2016159077
(71) Applicant: Sony Corporation, Tokyo 108-0075 (JP)
(72) Inventor: TSUKAMOTO, Kei, Tokyo 108-0075 (JP); KAWAGUCHI, Hiroto, Tokyo 108-0075 (JP)
(74) Representative: MFG Patentanwälte Meyer-Wildhagen Meggle-Freund Gerhard PartG mbB
(86) International application number: PCT/JP2017/028166
(87) International publication number: WO 2018/034159

(57) **Abstract**

A sensor includes a first conductive layer and a second conductive layer both being deformable and arranged to face each other; and a capacity-forming portion arranged between the first conductive layer and the second conductive layer and including a plurality of sensing portions, in which at least one of the first conductive layer or the second conductive layer is divided into a plurality of conductive portions by a predetermined conductive layer division pattern.

## Description

### TECHNICAL FIELD

The present technology relates to a sensor, an input device, and an electronic apparatus.

### BACKGROUND ART

A sensor used in an electronic apparatus or the like that can detect a pressing position or pressing force on an input operation surface is proposed (see Patent Document 1 below, for example).

### CITATION LIST

### PATENT DOCUMENT

Patent Document 1: Japanese Patent Application Laid-Open No. 2015-190859

### SUMMARY OF THE INVENTION

### PROBLEMS TO BE SOLVED BY THE INVENTION

A sensor described above may be used not only in a flat state but also in a bent state. It is desirable to detect a pressing position as well as deformation by external force such as bending in order to broaden usages of a sensor, functions thereof, and the like.

The present technology is made in view of the above-described problem, and directed to providing a sensor, an input device, and an electronic apparatus capable of detecting deformation by external force such as bending.

### SOLUTIONS TO PROBLEMS

To solve the above-described problem, the present technology is, for example, a sensor including:
a first conductive layer and a second conductive layer both being deformable and arranged to face each other; and
a capacity-forming portion arranged between the first conductive layer and the second conductive layer and including a plurality of sensing portions,
in which at least one of the first conductive layer or the second conductive layer is divided into a plurality of conductive portions by a predetermined conductive layer division pattern.

The present technology may also be an input device including the above-described sensor.

The present technology may also be an electronic apparatus including the above-described sensor.

### EFFECTS OF THE INVENTION

According to at least one embodiment of the present technology, deformation caused by external force such as bending can be detected. Note that the effect recited herein is not necessarily limited and may be any effect disclosed in the present technology. Additionally, the content of the present technology should not be understood in a manner limited by the effects exemplified in the following description.

### BRIEF DESCRIPTION OF DRAWINGS

Fig. 1 is a view illustrating an exemplary external view of an electronic apparatus according to an embodiment.
Fig. 2 is a block diagram illustrating an exemplary configuration of the electronic apparatus according to the embodiment.
Fig. 3 is a view to describe an exemplary configuration of a sensor according to an embodiment.
Fig. 4 is a diagram to describe the exemplary configuration of the sensor according to the embodiment.
Fig. 5 is a diagram to describe an exemplary configuration of a capacity-forming portion according to the embodiment.
Fig. 6 is a diagram to describe the exemplary configuration of the capacity-forming portion according to the embodiment.
Fig. 7 provides views to describe the exemplary configuration of the capacity-forming portion according to the embodiment.
Fig. 8 provides views to describe the exemplary configuration of the capacity-forming portion according to the embodiment.
Figs. 9A and 9B are diagrams to describe an exemplary arrangement of sensing portions according to the embodiment.
Fig. 10 is a diagram to describe an exemplary connection between a controller IC and the sensor according the embodiment.
Fig. 11 is a diagram to describe an exemplary connection between the controller IC and first conductive portions according to the embodiment.
Fig. 12 is a diagram to describe functions of the controller IC according to the embodiment.
Figs. 13A, 13B, and 13C are diagrams to describe a change in a resistance value of a first conductive portion according to the embodiment.
Figs. 14A and 14B are diagrams to describe examples of deformation of the sensor according to the embodiment.
Fig. 15 is a flowchart to describe the functions of the controller IC according to the embodiment.
Figs. 16A and 16B are diagrams to describe an example of correction processing.
Figs. 17A, 17B, and 17C are diagrams to describe an example of the correction processing.
Fig. 18 is a flowchart to describe exemplary processing to enable a pressure distribution detection mode.
Fig. 19 provides diagrams to describe a state that a curvature is varied by an adjustment degree of a band portion.
Fig. 20 is a diagram to describe a modified example.
Fig. 21 is a diagram to describe a modified example.
Fig. 22 is a view to describe a modified example.
Fig. 23 provides views to describe the modified examples.
Fig. 24 is a diagram to describe a modified example.
Fig. 25 is a diagram to describe a modified example.

### MODE FOR CARRYING OUT THE INVENTION

In the following, an embodiment and the like of the present technology will be described referring to the drawings. Note that the description will be provided in the following order.

### <1. Embodiment>

### <2. Modified Examples>

Note that the embodiment and the like described below are preferred specific examples of the present technology and the content of the present technology is not limited to the embodiment and the like.

### <1. Embodiment>

### [1.1 Exemplary External View of Electronic Apparatus]

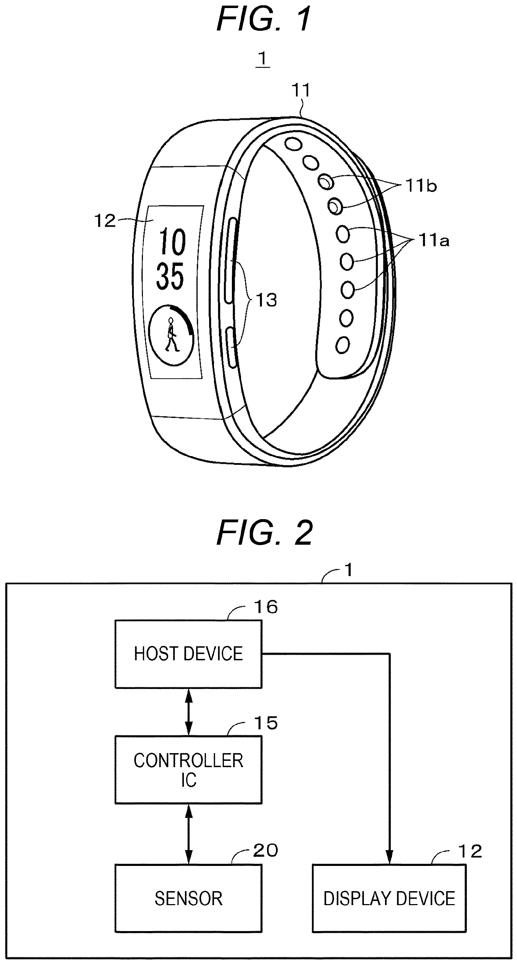

Fig. 1 illustrates an exemplary external view of an electronic apparatus (electronic apparatus 1) according to an embodiment of the present technology. The electronic apparatus 1 is, for example, a watch-type and so-called wearable apparatus detachable from a human body. The electronic apparatus 1 includes, for example: a band portion 11 to be put on an arm; a display device 12 to display numerals, characters, drawing patterns, and the like; and operation buttons 13. In the band portion 11, a plurality of holes 11a and protrusions 11b formed on an inner peripheral surface side (surface located on a side in contact with the arm when the electronic apparatus 1 is put on) are formed.

In a used state, the electronic apparatus 1 is bent such that the band portion 11 becomes a substantially circular shape as illustrated in Fig. 1, and is put on the arm with the protrusions 11b inserted into the holes 11a. A size of a diameter can be adjusted in accordance with a size of the arm by adjusting positions of the holes 11a into which the protrusions 11b are inserted. When the electronic apparatus 1 is not in use, the protrusions 11b are removed from the holes 11a, and the band portion 11 is kept in a substantially flat state. A sensor according to an embodiment of the present technology is provided in an entire part of the band portion 11, for example.

### [1.2 Exemplary Configuration of Electronic Apparatus]

Fig. 2 is a block diagram illustrating an exemplary configuration of the electronic apparatus 1. As illustrated in Fig. 2, the electronic apparatus 1 includes not only the above-described display device 12 but also a sensor 20 including a controller IC 15 as a drive controller, and a host device 16. The sensor 20 may include the controller IC 15.

### (Sensor)

The sensor 20 is capable of detecting both pressing and bending. The sensor 20 detects a change in an electrostatic capacity in response to pressing, and outputs an output signal corresponding to the change to the controller IC 15. Additionally, the sensor 20 detects a change in a resistance value (resistance change) in response to bending and outputs an output signal corresponding to the change to the controller IC 15.

### (Host Device)

The host device 16 executes various kinds of processing on the basis of information supplied from the controller IC 15. For example, the host device executes processing to display character information, image information, and the like on the display device 12, processing to move a cursor displayed on the display device 12, processing to scroll a screen, and the like.

### (Display Device)

The display device 12 is, for example, a flexible display device and displays a video (screen) on the basis of a video signal, a control signal, and the like supplied from the host device 16. Examples of the display device 12 can include a liquid crystal display, an electro luminescence (EL) display, and an electronic paper sheet, and the like, but not limited thereto.

### [1.3 Exemplary Configuration of Sensor]

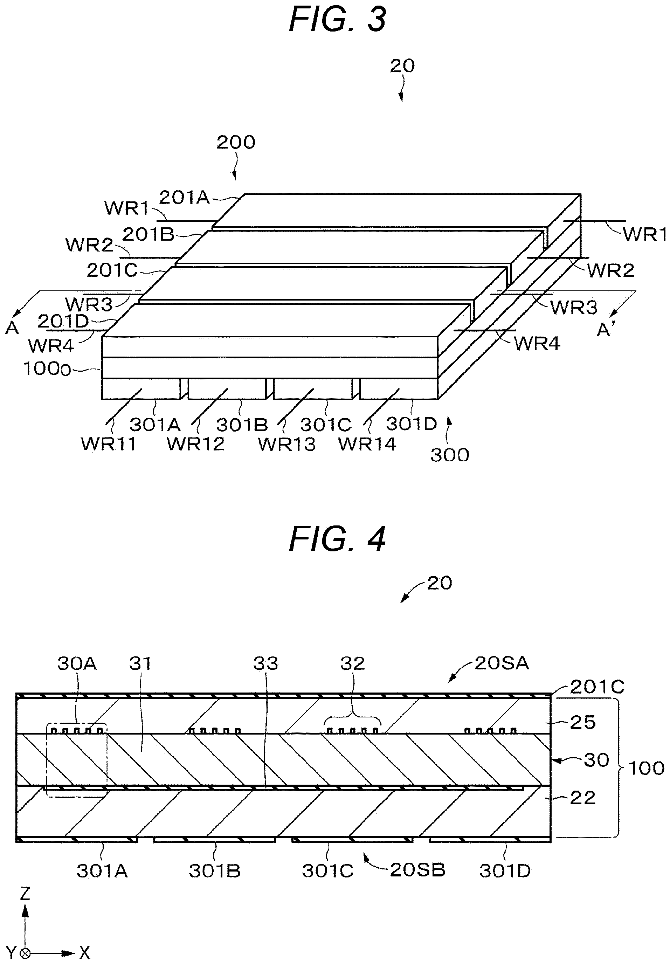

Fig. 3 is a diagram schematically illustrating an exemplary configuration of the sensor 20. The sensor 20 roughly includes a multilayer body 100, a first conductive layer 200 provided on one main surface of the multilayer body 100, and a second conductive layer 300 provided on the other main surface of the multilayer body 100.

The first conductive layer 200 is divided into a plurality of first conductive portions by a first conductive layer division pattern. In the present example, the first conductive layer 200 is divided into four first conductive portions (first conductive portions 201A, 201B, 201C, and 201D) by a stripe-like first conductive layer division pattern. Each of the first conductive portions is physically and electrically isolated. Note that, in a case where there is no need to distinguish the first conductive portions one from the other, each one will be referred to as a first conductive portion 201 as appropriate.

A wire is connected to both ends of the first conductive portion 201. For example, a wire WR1 is connected to both ends of the first conductive portion 201A. Similarly, a wire WR2 is connected to both ends of the first conductive portion 201B, a wire WR3 is connected to both ends of the first conductive portion 201C, and a wire WR4 is connected to both ends of the first conductive portion 201D.

The second conductive layer 300 is divided into a plurality of second conductive portions by a second conductive layer division pattern. In the present example, the second conductive layer 300 is divided into four second conductive portions (second conductive portions 301A, 301B, 301C, and 301D) by a stripe-like second conductive layer division pattern. Each of the second conductive portions is physically and electrically isolated. Note that in a case where there is no need to distinguish the second conductive portions one from the other, each one will be referred to as a second conductive portion 301 as appropriate.

A wire is connected to both ends of the second conductive portion 301. For example, a wire WR11 is connected to both ends of the second conductive portion 301A. Similarly, a wire WR12 is connected to both ends of the second conductive portion 301B, a wire WR13 is connected to both ends of the second conductive portion 301C, and a wire WR14 is connected to both ends of the second conductive portion 301D.

As illustrated in Fig. 3, a division direction by the first conductive layer division pattern is substantially orthogonal to a division direction by the second conductive layer division pattern. In the present example, the division direction corresponds to an arrangement direction of the plurality of conductive portions divided by each of the conductive layer division patterns.

Note that, in the above-described example, a space between the respective first conductive portions 201 and a space between the respective second conductive portions 301 are slit-like spaces, but such a space may include an insulation layer or the like.

Fig. 4 is a diagram illustrating a cross section in a case of cutting the sensor 20 along a cross-section line A-A (see Fig. 3). One out of both surfaces of the sensor 20 is an operation surface 20SA having a flat surface shape or a curved surface shape. In the following, among both main surfaces of the sensor 20, a main surface located on an opposite side of the operation surface 20SA will be referred to as a rear surface 20SB. Among both main surfaces of the multilayer body 100, a surface located on the operation surface 20SA side will be referred to as an upper surface and a surface located on the rear surface 20SB side will be referred to as a lower surface. Additionally, axes orthogonal to each other inside the operation surface 20SA will be referred to as an X axis and a Y axis respectively, and an axis perpendicular to the operation surface 20SA will be referred to as a Z axis. A Z-axis direction may be referred to as an upward direction, and a negative Z-axis direction may be referred to as a downward direction.

As illustrated in Fig. 4, the sensor 20 includes the multilayer body 100. The above-described first conductive portions 201 are formed on one main surface of the multilayer body 100, and Fig. 4 illustrates the first conductive portion 201C out of these first conductive portions. The above-described second conductive portions 301 are formed on the other main surface of the multilayer body 100.

The first conductive layer division pattern is, for example, a pattern in which the first conductive portions 201 are provided in a manner extending in an X-axis direction and spaced at predetermined intervals alternately in a Y-axis direction. On the other hand, the second conductive layer division pattern is, for example, a pattern in which the second conductive portions 301 are provided in a manner extending in the Y-axis direction and spaced at predetermined intervals alternately in the X-axis direction.

The multilayer body 100 includes a capacity-forming portion 30. A deformable layer 25 is provided on an upper surface side of the capacity-forming portion 30 (between the first conductive layer 200 and the capacity-forming portion 30). A deformable layer 22 is provided on a lower surface side of the capacity-forming portion 30 (between the second conductive layer 300 and the capacity-forming portion 30). The first conductive portions 201 and the second conductive portions 301, which correspond to a ground (GND) layer at the time of detecting an electrostatic capacity value, are provided via the deformable layer 25 and the deformable layer 22. In other words, the sensor 20 has a configuration in which the capacity-forming portion 30 is shielded from the outside in terms of an electric field on the operation surface 20SA side and the rear surface 20SB side. Furthermore, the sensor 20 has a configuration in which a distance between first conductive portions 201 and the capacity-forming portion 30 can be changed when the operation surface 20SA is pressed. When the operation surface 20SA is pressed by a conductor or a nonconductor, the distance between second conductive portions 301 and the capacity-forming portion 30 is changed, and therefore, a capacity change is detected by the capacity-forming portion 30.

### (First and Second Conductive Portions)

First conductive portions 201 constituting the first conductive layer 200 are a transparent conductive layer. As a material of the first conductive portion 201, for example, one or more kinds selected from a group including a metal oxide material having electrical conductivity, a metal material, a carbon material, a conductive polymer, and the like can be used. Examples of the metal oxide material can include an indium tin oxide (ITO), a zinc oxide, an indium oxide, an antimony-added tin oxide, a fluorine-added tin oxide, an aluminum-added zinc oxide, a gallium-added zinc oxide, a silicon-added zinc oxide, a zinc oxide-tin oxide system, an indium oxide-tin oxide system, a zinc oxide-indium oxide-magnesium oxide system, and the like. As the metal material, for example, a metal nano-particle, a metal wire, or the like can be used. Specific examples of these materials can include metals such as copper, silver, gold, platinum, palladium, nickel, tin, cobalt, rhodium, iridium, iron, ruthenium, osmium, manganese, molybdenum, tungsten, niobium, tantalum, titanium, bismuth, antimony, and lead, an alloy thereof, and the like. Examples of the carbon material can include carbon black, a carbon fiber, fullerene, graphene, a carbon nanotube, carbon a micro coil, nanohorn, and the like. As the conductive polymer, for example, polyaniline, polypyrrole, polythiophene which are substituted or unsubstituted, a (co)polymer including one or two kinds selected from the mentioned conductive polymers, and the like can be used.

In the present example, the first conductive portions 201 are stripe-like shaped (strip form), but not limited thereto, and an appropriate shape can be adopted. Additionally, the first conductive portions 201 may be provided on a base material (conductive base material). In this case, the base material is transparent to visible light and has flexibility. The base material may have a film-like shape or a plate-like shape. Here, the film also includes a sheet. While the exemplary first conductive portion 201 is described above, the similar is applied to the second conductive portions 301.

### (Multilayer Body)

The multilayer body 100 includes: the deformable layer 22 provided on the second conductive portions 301; the capacitive-coupling type capacity-forming portion 30 provided on the deformable layer 22; and the deformable layer 25 provided on the capacity-forming portion 30.

The deformable layer 22 and the capacity-forming portion 30 are bonded to each other with a pasting layer (not illustrated). Additionally, the capacity-forming portion 30 and the deformable layer 25 are also bonded to each other with a pasting layer (not illustrated). The second conductive portions 301 may be directly provided on the rear surface of the deformable layer 22, but may also be bonded with a pasting layer. The above pasting layers each include an adhesive agent. As the adhesive agent, one or more kinds selected from a group including an acrylic adhesive agent, a silicone adhesive agent, a urethane adhesive agent, and the like can be used, for example. In the present specification, pressure sensitive adhesion is defined as a kind of adhesion.

### (Deformable Layer)

The deformable layer 22 separates the second conductive portions 301 from the capacity-forming portion 30 at a predetermined interval. The deformable layer 22 is elastically deformable by pressing operation on the operation surface 20SA. The deformable layer 22 is an elastic layer including an elastic body. As the elastic body, for example, a material having flexibility such as rubber, foamed rubber, and elastomer are preferable. The deformable layer 22 has a film-like shape or a plate-like shape. While the exemplary deformable layer 22 is described above, the similar is applied to the deformable layer 25.

### (Capacity-Forming Portion)

The capacity-forming portion 30 can detect touch operation and pressing operation on the operation surface 20SA. The capacity-forming portion 30 includes a plurality of sensing portions 30A. The sensing portions 30A each detect a change in an electrostatic capacity caused by touch operation and pressing operation, and output the change to the controller IC 15.

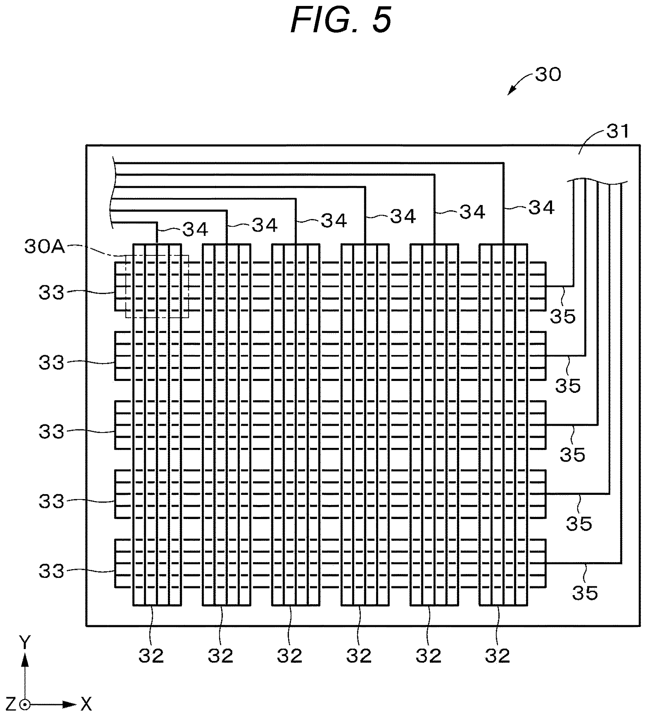

As illustrated in Fig. 5, the capacity-forming portion 30 includes: a base material 31; a plurality of transmission electrodes 32 provided on an upper surface of the base material 31; and a plurality of reception electrodes 33 provided on a lower surface of the base material 31. The plurality of transmission electrodes 32 has a stripe-like shape as a whole. Specifically, the plurality of transmission electrodes 32 extends in the Y-axis direction and is arranged in a manner spaced at regular intervals in the X-axis direction. The plurality of reception electrodes 33 has a stripe-like shape as a whole. Specifically, the plurality of reception electrodes 33 extends in the X-axis direction and is arranged in a manner spaced at regular intervals in the Y-axis direction.

The transmission electrodes 32 are provided on a nearer side than the reception electrode 33 when viewed from the operation surface 20SA side. The transmission electrodes 32 and the reception electrodes 33 are arranged so as to intersect perpendicular to each other, and a sensing portion 30A is formed at each of the intersections. In a plan view of the plurality of sensing portions 30A from the Z-axis direction, the plurality of sensing portions 30A is two-dimensionally arranged in a matrix form.

A wire 34 is drawn from one end of the transmission electrode 32 and passed along an outer edge of the base material 31 and connected to a flexible printed circuit (FPC) not illustrated. A wire 35 is also drawn from one end of the reception electrode 33 and passed along an outer edge of the base material 31 and connected to the FPC not illustrated. Note that illustration of the wire 35 is omitted in Fig. 4 and the like.

### (Base Material)

The base material 31 has flexibility. The base material 31 has a film-like or plate-like shape, for example. As a material of the base material 31, both of an inorganic material and an organic material can be used, and using the organic material is preferable. As the organic material, for example, a known polymer material can be used. Specific examples of the known polymer material can include triacetyl cellulose (TAC), polyester (TPEE), polyethylene terephthalate (PET), polyethylene naphthalate (PEN), polyimide (PI), polyamide (PA), aramid, polyethylene (PE), polyacrylate, polyether sulfone, polysulfone, polypropylene (PP), diacetyl cellulose, polyvinyl chloride, an acrylic resin (PMMA), polycarbonate (PC), an epoxy resin, a urea resin, a urethane resin, a melamine resin, a cycloolefin polymer (COP), a cycloolefin copolymer (COC), and the like.

### (Transmission Electrode and Reception Electrode)

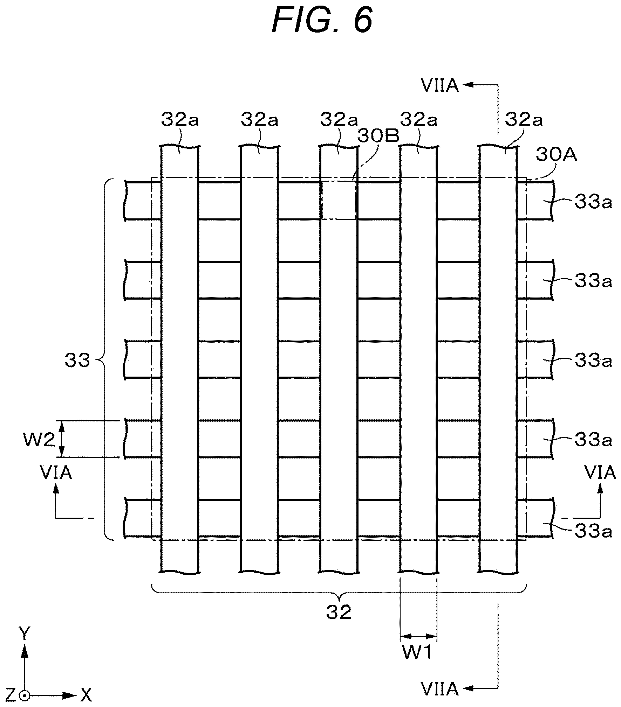

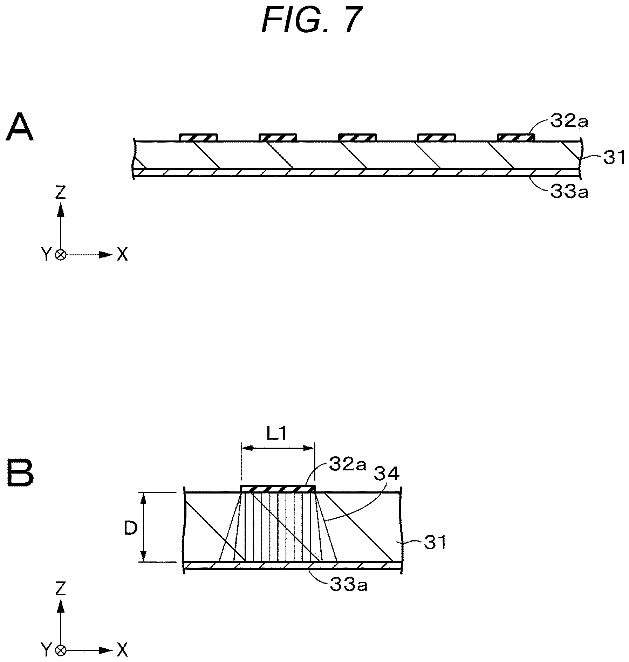

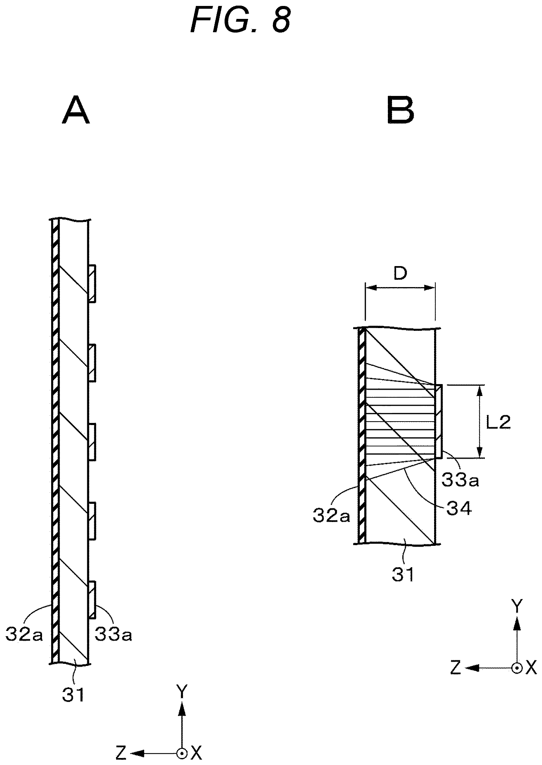

In the following, configurations of a transmission electrode 32 and a reception electrode 33 will be described referring to Figs. 6 to 8. Note that Fig. 7A illustrates a cross section taken along a cutting line VIA-VIA in Fig. 6, and Fig. 8A illustrates a cross section taken along a cutting line VIIA-VIIA in Fig. 6.

As illustrated in Fig. 6, the transmission electrode 32 includes a plurality of linear sub-electrodes (second sub-electrodes) 32a. The plurality of sub-electrodes 32a is arranged in a manner extending in the Y-axis direction and is spaced from each other in the X-axis direction. An interval between the adjacent sub-electrodes 32a in the X-axis direction may be constant or may be different.

As illustrated in Fig. 6, the reception electrode 33 includes a plurality of linear sub-electrodes (first sub-electrodes) 33a. The plurality of sub-electrodes 33a is arranged in a manner extending in the X-axis direction and is spaced apart from each other in the Y-axis direction. An interval between the adjacent sub-electrodes 33a in the Y-axis direction may be constant or may be different.

Intersections 30B are formed by the sub-electrodes 32a and 33a. The sub-electrodes 32a are provided on a nearer side than the sub-electrodes 33a when viewed from the operation surface 20SA side. When the controller IC 15 applies voltage between sub-electrodes 32a and 33a, an intersection 30B of the sub-electrodes 32a and 33a forms capacitive coupling (electric flux line) (see Figs. 7B and 8B). The sensing portion 30A detects a summed value of capacity changes at the plurality of intersections 30B included in the intersections 30B, and outputs the summed value to the controller IC 15. Widths W1 and W2 of respective sub-electrodes 32a and 33a are, for example, the same or substantially the same, and in the present example, these widths substantially coincide with widths L1 and L2 of an intersection 30B. Sizes of L1 and L2 are, for example, 100 µm to 200 µm.

The sub-electrodes 32a and 33a are transparent electrodes having transparency to visible light. Examples of a material of the sub-electrodes 32a and 33a can include materials similar to the materials of the first conductive portion 201 described above. As a method of forming the sub-electrodes 32a and 33a, for example, a printing method such as screen printing, gravure printing, gravure offset printing, flexographic printing, or inkjet printing, or a patterning method using a photolithography technique can be used.

Note that a surface layer as a protective layer may be formed on an upper surface of the first conductive portions 201. The surface layer includes the operation surface 20SA and has a configuration in which a substantially constant thickness can be kept even when the operation surface 20SA is pressed by pressing operation. The surface layer is a base material having transparency to visible light and having flexibility. The base material may have a film-like shape or a plate-like shape. Examples of a material of the base material can include materials similar to a base material included in the first conductive portion 201. Note that the surface layer may be a coating layer.

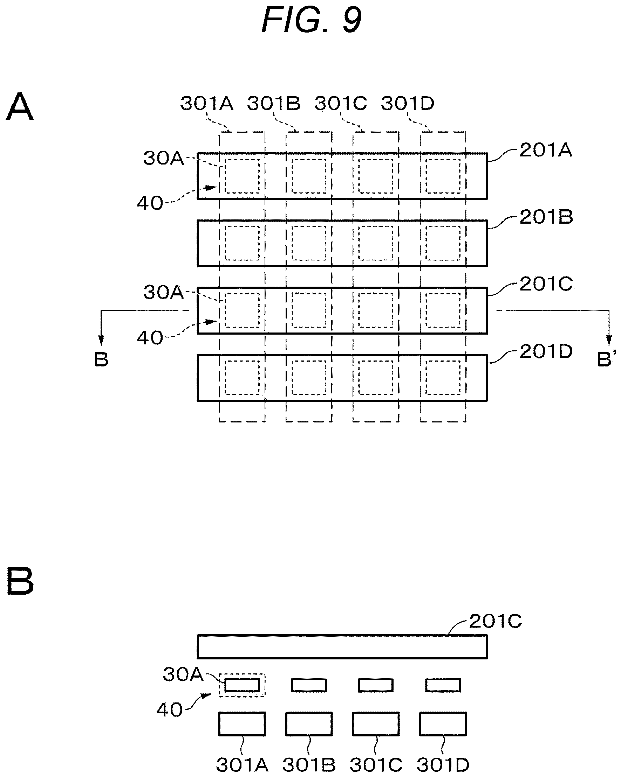

Fig. 9A is a top view of the above-described sensor 20. Additionally, Fig. 9B is a diagram schematically illustrating a cross section taken along a cutting line B-B' in Fig. 9A. Figs. 9A and 9B omit illustration of some components for convenience of description. As illustrated in Fig. 9A, for example, intersections 40 are formed at positions where the first conductive portions 201 and the second conductive portions 301 face each other. The above-described sensing portion 30A is arranged at each of the intersections 40.

### (Controller IC)

The controller IC 15 has a function to detect pressure distribution (hereinafter referred to as a second function as appropriate) on the basis of a change in an electrostatic capacity in each of the plurality of sensing portions 30A. The controller IC may detect, from a change in an electrostatic capacity, magnitude of pressure (pressing force) by pressing. The controller IC 15 outputs, to the host device 16, information indicating the pressure distribution or information indicating information obtained from the pressure distribution (e.g., presence/absence of pressing and a pressed point).

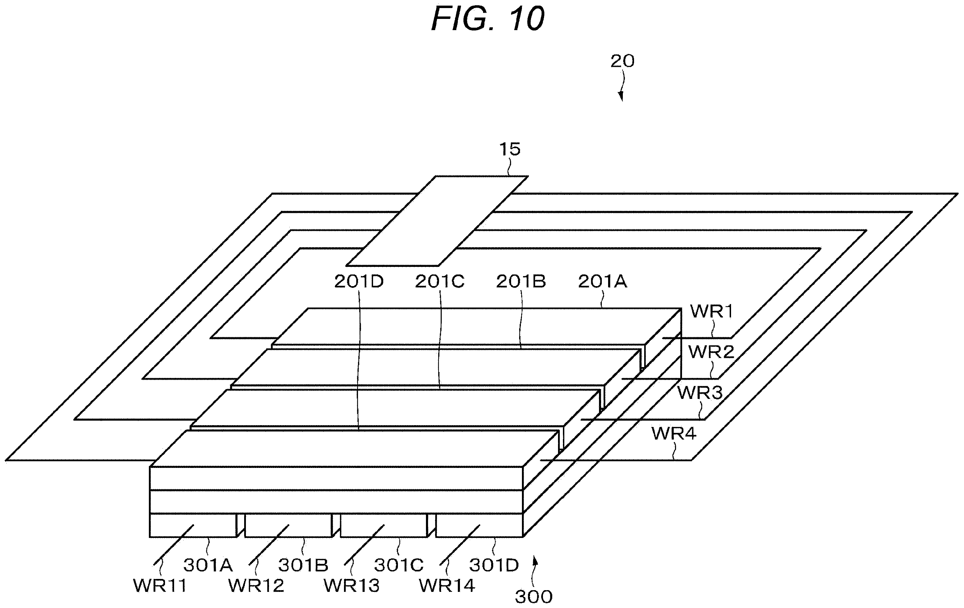

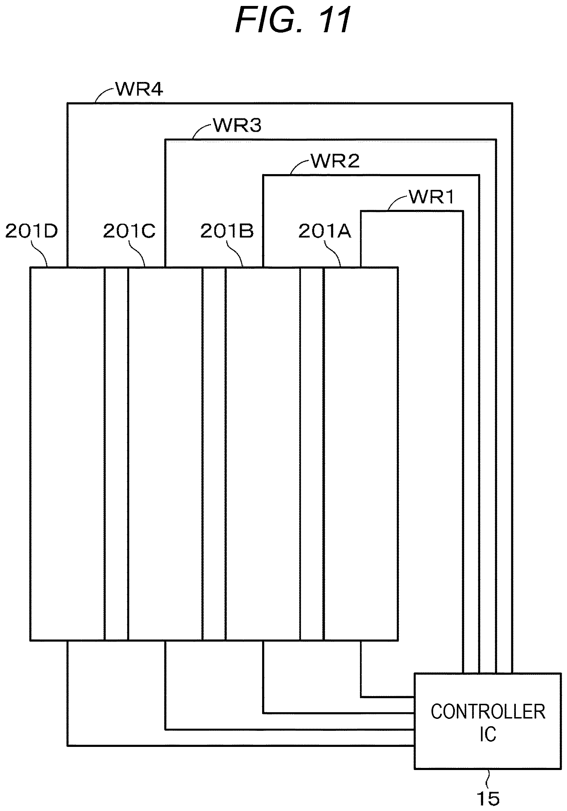

As illustrated in Figs. 10 and 11, both ends of the first conductive portion 201A are connected to the controller IC 15 via the wire WR1, for example. Similarly, each of other first conductive portions 201 is connected to the controller IC 15 via a wire. Although illustration of a connection relation is omitted in Fig. 10, both ends of the second conductive portion 301A are connected to the controller IC 15 via the wire WR11, for example. Similarly, each of other second conductive portions 301 is connected to the controller IC 15 via a wire. Note that the first and second conductive portions 201 and 301 may be connected to different controller ICs respectively, and such controller ICs may be collectively referred to as the controller IC 15.

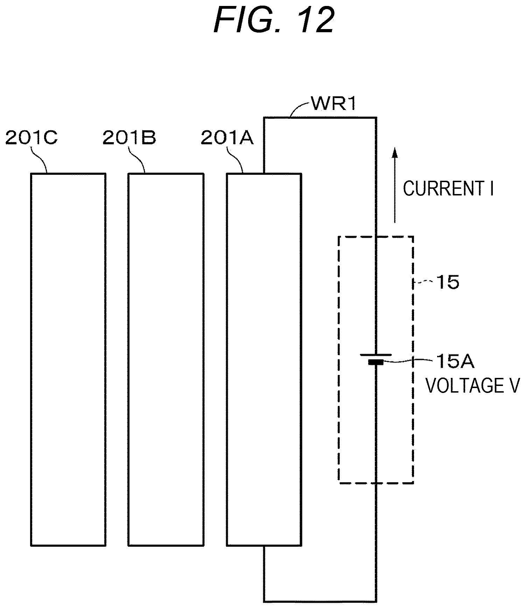

As illustrated in Fig. 12, the controller IC 15 has a constant voltage source 15A that generates voltage V. The controller IC 15 applies the voltage V to the first conductive portions 201 and the second conductive portions 301. Fig. 12 illustrates a state where the voltage V is applied to the first conductive portion 201A. The controller IC 15 detects a change in a resistance value of the first conductive portion 201A from a change in current I flowing at the time of applying the voltage V.

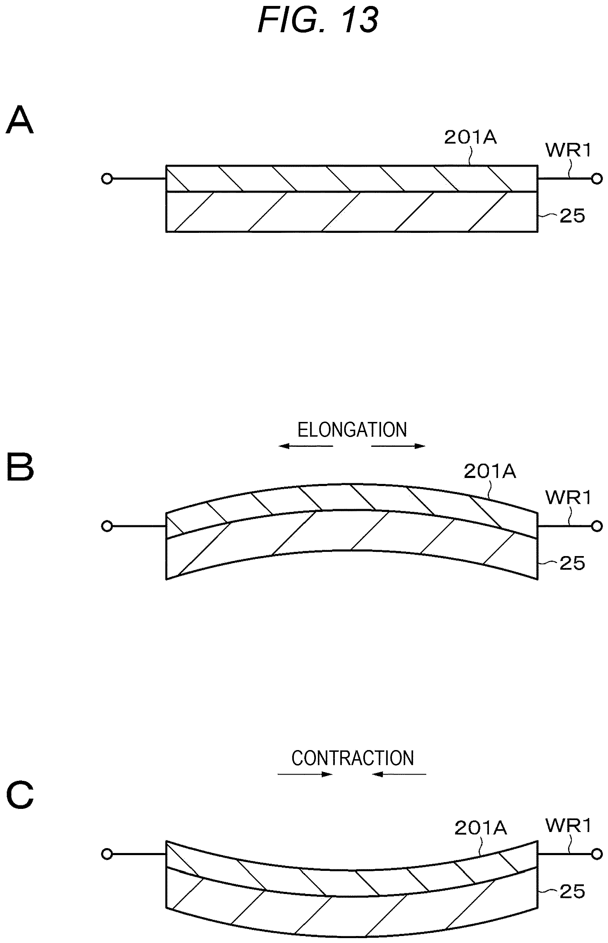

Figs. 13A to 13C are diagrams to describe a change in a resistance value when a first conductive portion 201 (e.g., first conductive portion 201A) is bent. Note that, in Figs. 13A to 13C, the first conductive portion 201A and the deformable layer 25 are illustrated, and illustration of other components are omitted as appropriate.

A resistance value of the first conductive portion 201A in an initial state (in which the first conductive portion 201A is not bent) illustrated in Fig. 13A is defined as a resistance value R. As illustrated in Fig. 13B, assume that the first conductive portion 201A is deformed by external force in a manner protruding upward with reference to a direction facing the drawing. In this case, since the first conductive portion 201A is elongated as a whole, a resistance value thereof is increased by ΔR, for example, and a total resistance value becomes (R + ΔR). On the other hand, as illustrated in Fig. 13C, assume that the first conductive portion 201A is deformed by external force in a manner protruding downward with reference to the direction facing the drawing. In this case, since the first conductive portion 201A is contracted as a whole, the resistance value is decreased by ΔR, for example, and the total resistance value becomes (R - ΔR).

With the change in the resistance value of the first conductive portion 201A, the current I measured by the controller IC 15 is also changed. The controller IC 15 acquires a resistance value on the basis of the voltage V and a measured current I, and compares the acquired resistance value with the resistance value R in the initial state, thereby achieving detection of a fact that at least the first conductive portion 201A is bent. Bending of the sensor 20 can be detected by performing similar processing for other first conductive portions 201 and other second conductive portions 301. In other words, the controller IC 15 according to the embodiment has a function to detect bending of the sensor 20 (hereinafter referred to a first function as appropriate) on the basis of changes in resistance values of the first conductive portions 201 and changes in resistance values of the second conductive portions 301 in addition to the above-described second function.

On the other hand, pressure distribution can be detected on the basis of electrostatic capacity values as described above by setting, to a ground level, both ends of each of the first conductive portion 201 and both ends of each of the second conductive portion 301. Thus, under the control of the controller IC 15, the first conductive portions 201 and the second conductive portions 301 can be switched between a case of behaving as the ground layers and a case of being objects in which changes in resistance values are measured.

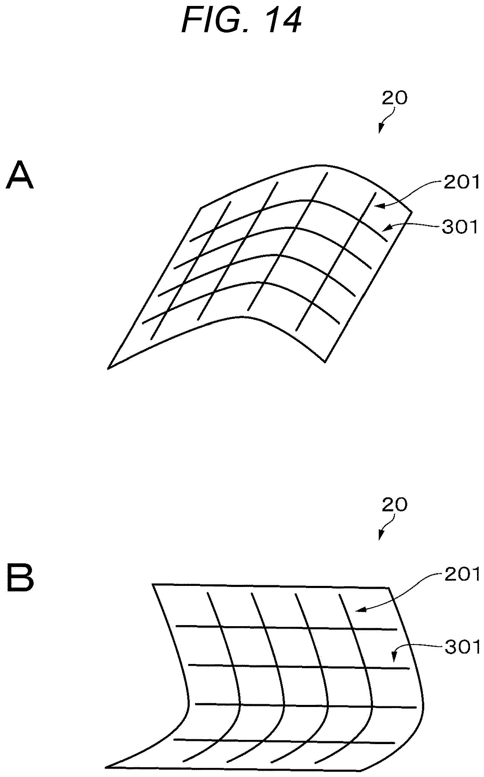

In the present example, since the first conductive layer 200 and the second conductive layer 300 are divided into the plurality of first conductive portions 201 and the plurality of second conductive portions 301 respectively, it is possible to detect various kinds of bending occurring in the sensor 20 as schematically illustrated in Figs. 14A and 14B by detecting changes in resistance values of the respective first conductive portions 201 and changes in resistance values of respective second conductive portions 301. Additionally, a bending manner of the sensor 20 can be grasped in a three-dimensional view. Note that, in Figs. 14A and 14B, the first conductive portions 201 and the second conductive portions 301 are simplified by solid lines (straight lines).

In the present example, a bending direction can also be detected by determining whether a resistance value is increased or decreased. Furthermore, which direction out of the X-axis direction and the Y-axis direction the sensor is bent in can be detected by determining in which one of the first conductive portion 201 and second conductive portions 301 there is a change in a resistance value.

Meanwhile, even in a case where pressing operation is made on the operation surface 20SA of the sensor 20, the first conductive portions 201 are locally deformed and resistance values may be changed. However, since deformation caused by such pressing operation is smaller than deformation caused by bending, a change in a resistance value of a first conductive portion 201 caused by pressing operation is zero or little. Therefore, it is possible to distinguish between a change in a resistance value caused by pressing and a change in a resistance value caused by bending by providing a threshold value or the like relative to a change in a resistance value, for example.

### [1.4 Exemplary Operation of Sensor]

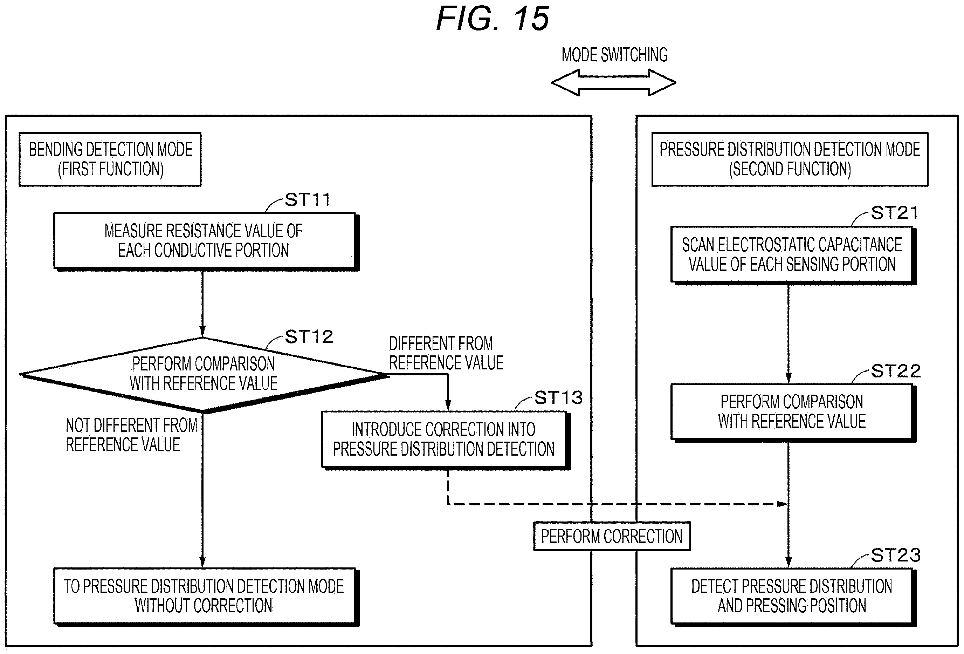

Fig. 15 is a flowchart illustrating a processing flow in the first function that is the function to detect bending of the sensor 20 and in the second function that is the function to detect distribution of pressing (pressure) on the sensor 20. In the present example, the first function and the second function are switchable as modes.

### (Processing in Bending Detection Mode)

First, processing in a bending detection mode will be described. In step ST11, the controller IC 15 measures resistance values of respective conductive portions included in both of the first conductive portions 201 and second conductive portions 301. Then, the processing proceeds to step ST12.

In step ST12, each of the resistance values measured in step ST11 is compared with a reference value that is a predetermined setting value. In a case where there is a difference corresponding to a predetermined value or more between any of resistance values and the reference value, stated differently, a change in a resistance value is the predetermined value or more, the processing proceeds to step ST13. In a case where there is not the difference corresponding to the predetermined value or more between any of resistance values and the reference value, the processing proceeds to step ST14.

In step ST13, bending is detected and also correction processing using a bending detection result is applied to a detection result of pressure distribution obtained by the processing in a pressure distribution detection mode. Note that details of the correction processing will be described later.

In step ST14, the mode is switched from the bending detection mode to the pressure distribution detection mode without performing the correction processing.

### (Processing in Pressure Distribution Detection Mode)

Next, processing in the bending detection mode will be described. In step ST21, processing to scan values of electrostatic capacities (electrostatic capacity values) of all of the sensing portions 30A is performed. Then, the processing proceeds to step ST22.

In step ST22, processing to compare each of the electrostatic capacity values with a predetermined reference value is performed. The reference value here is, for example, an initial value obtained by calibrating all of the electrostatic capacity values. In other words, in step ST22, the processing to acquire a difference between the initial value and each of the electrostatic capacity values obtained in the processing of step ST21 is performed. Then, the processing proceeds to step ST23.

In step ST23, processing results in step ST22 is subjected to correction processing, and pressure distribution is detected in accordance with the results. Then, the controller IC 15 detects, from the detected pressure distribution, a position actually pressed (coordinates) on the operation surface 20SA.

### (Correction Processing)

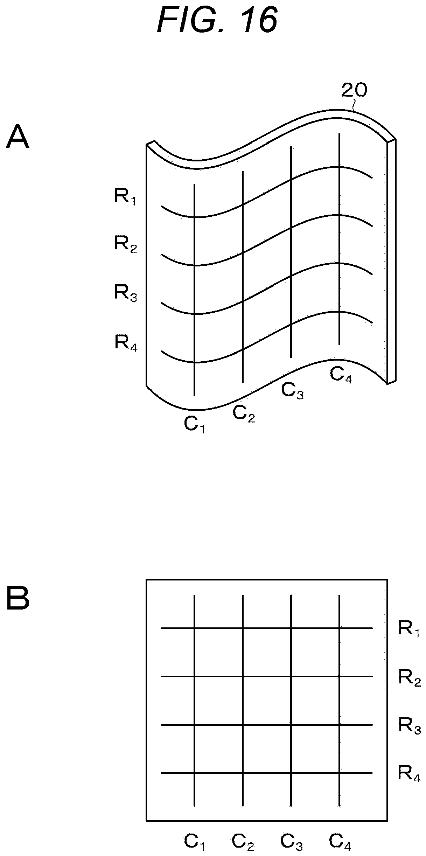

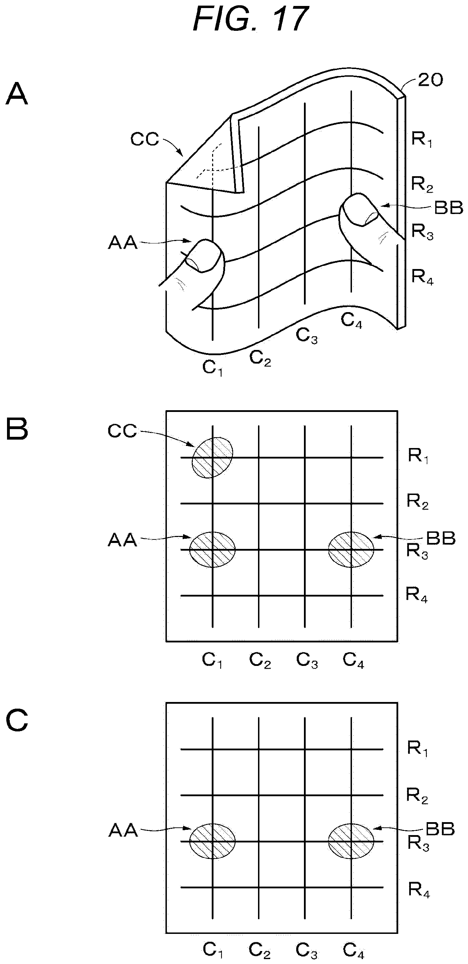

Next, a specific example of the correction processing will be described referring to Figs. 16 and 17. Fig. 16A illustrates an example of the sensor 20. Incidentally, in the present example, the description will be provided assuming that the sensor 20 has a bent flexible shape as a whole for easy understanding on the description. Fig. 16A illustrates the sensor 20 in an initial state in which the sensor is neither bent by external force nor pressed. Note that, in Figs. 16 and 17, center lines of the respective first conductive portions 201 are indicated by solid lines R₁, R₂, R₃, and R₄ corresponding to rows, and center lines of the respective second conductive portions 301 are indicated by solid lines C₁, C₂, C₃, and C₄ corresponding to columns, simplifiedly.

Fig. 16B is an image diagram visualizing the pressure distribution of the sensor 20 in the initial state. As illustrated in Fig. 16B, since there is neither bending nor pressing in the initial state, no pressure is detected and there is no reaction.

Fig. 17A illustrates an exemplary state in which operation is made on the sensor 20. For example, a vicinity of a point where the line R₃ intersects with the line C₁ (hereinafter referred to as an operation region AA as appropriate) and a vicinity of a point where the line R₃ intersects with the line C₄ (hereinafter referred to as an operation region BB as appropriate) are pressed with fingers. Additionally, assume that a region in a vicinity of an upper left corner of the sensor 20 (hereinafter referred to as a region CC as appropriate) is bent independently from a user's intention.

Fig. 17B is an image diagram visualizing pressure distribution in the operation state illustrated in Fig. 17A. The pressure is detected in a point corresponding to the operation region AA and a point corresponding to the operation region BB. Furthermore, the pressure is also detected in the region CC where the sensor 20 is bent. In a case where no correction processing is performed, the point corresponding to the region CC may also be mistakenly detected as a region where pressing operation is made.

Accordingly, the correction processing is performed. The correction processing is, for example, processing to perform discrimination processing on the basis of presence/absence of a change in a resistance value so as to identify a correct operation region on the basis of the discrimination result. For example, in the state illustrated in Fig. 17A, lines that have been elongated (may also have been contracted) by bending are only a first conductive portion 201 corresponding to the line C₁ and a second conductive portion 301 corresponding to the line R₁, and therefore, lines having changes in resistance values by bending are only the first conductive portion 201 corresponding to the line C₁ and the second conductive portion 301 corresponding to the line R₁. On the other hand, since a resistance value is not changed by pressure caused by pressing operation (even in a case where there is a change, a changed amount is slight), it can be estimated that pressure in the region CC in which a resistance value is changed is not the pressure caused by pressing operation. Accordingly, as illustrated in Fig. 17C, the controller IC 15 outputs, as a detection result, pressure distribution that has been subjected to correction of excluding the region CC.

Since the correction processing using a bending detection result is thus performed, a pressing position and the like can be detected equivalent to when the sensor 20 is used in the flat state even when a surface on which the sensor 20 is mounted is a curved surface or the like. Pressure and bending can be detected by a single device without using separate sensors to detect pressure and bending.

Meanwhile, consumption current for the processing in the pressure distribution detection mode is larger than consumption current for the processing in the bending detection mode because scan processing to measure electrostatic capacity values of the sensing portions 30A is included. The consumption current for the processing in the bending detection mode is, for example, about several tens µA (micro amperes), whereas the consumption current for the processing in the pressure distribution detection mode is about several tens mA (milliamperes). Therefore, from the viewpoint of power consumption, it is advantageous to execute the processing corresponding to the pressure distribution detection mode only when necessary, such as when the electronic apparatus 1 is in use.

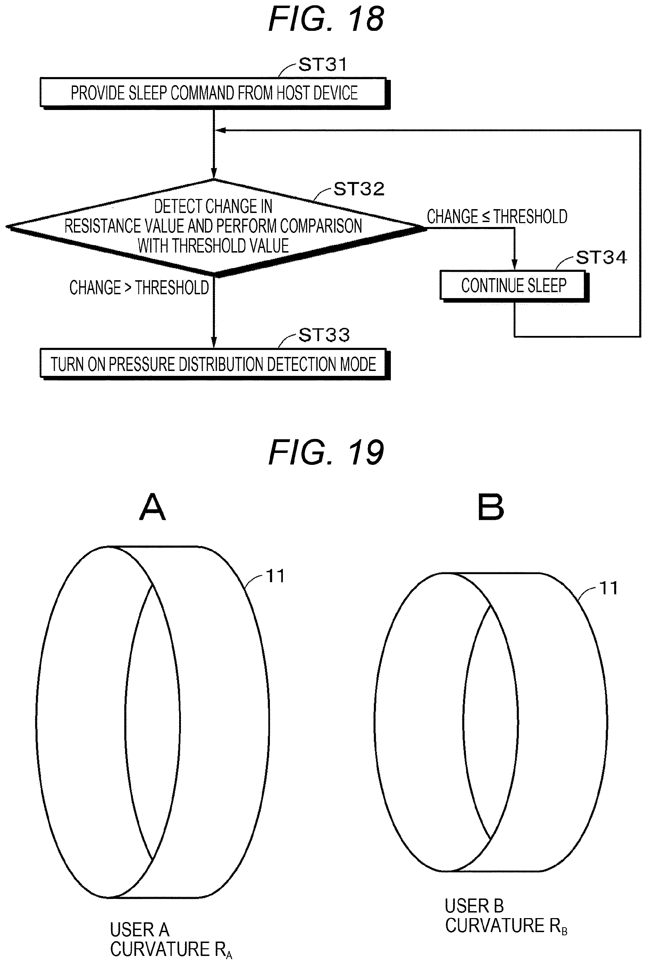

Therefore, it may be possible to add processing to discriminate whether the electronic apparatus 1 (watch-type electronic apparatus in the present example) is in use or not, and enable (turn on) the pressure distribution detection mode only when the electronic apparatus 1 is in use. Next, a specific example of this processing will be described referring to a flowchart of Fig. 18.

In step ST31, the host device 16 provides a command to the controller IC 15 to shift a current mode to a sleep mode. In response to this command, the controller IC 15 shifts the mode to the sleep mode (standby state) in which only the bending detection mode is executed, and a power consumption state becomes a low power consumption state. Then, the processing proceeds to step ST32.

In step ST32, the controller IC 15 measures resistance values of the first and second conductive portions 201 and 301, and compares a change in each of the resistance values with a predetermined threshold value. In a case where a change in at least one of the measured resistance values is larger than the threshold value, the processing proceeds to step ST33.

Here, in the case where a change in a resistance value is larger than the threshold value, it can be determined that the band portion 11 of the electronic apparatus 1 is bent, stated differently, it can be determined that the electronic apparatus 1 is in use, and therefore, processing to enable the pressure distribution detection mode is performed in step ST33, and the current state is shifted to a state (operative state) in which the pressure distribution detection mode can be performed. After that, the processing described referring to the flowchart of Fig. 15 is performed, for example.

Among the resistance values measured in the processing of step ST32, in a case where changes in all of the resistance values are the threshold value or less, the processing proceeds to step ST34. In step ST34, the sleep mode is continued, the processing returns to step ST32, and the determination processing in step ST32 is performed.

With the above-described processing, the pressure distribution detection mode can be enabled only when the electronic apparatus 1 is in use, and power consumption of the electronic apparatus 1 can be reduced.

Note that a use state and a non-use state of the electronic apparatus 1 can be discriminated by the above-described processing. Accordingly, processing to change content of acceptable input operation and processing to change display content and the like of the display device 12 may be performed in accordance with the use state and the non-use state of the electronic apparatus 1.

### [1.5 Processing that Can be Added to Electronic Apparatus]

The electronic apparatus 1 to which the sensor 20 according to the embodiment is applied is described above. Beside the processing in the above description, it is also possible to add processing in accordance with an electronic apparatus 1 to which the sensor 20 is applied.

For example, processing to identify a user of the electronic apparatus 1 described in the embodiment may be added. Figs 19A and 19B are diagrams schematically illustrating a state in which a curvature of the band portion 11 is varied by an adjustment degree of the band portion 11. For example, the band portion 11 is actually put around respective arms of two users (user A and user B) each having different arm sizes. The controller IC 15 stores, for each of the users, changes in resistance values of the first conductive portions 201 and changes in resistance values of second conductive portions 301 of the sensor 20 at this point. Then, next time and later, a user of the electronic apparatus 1 may be identified on the basis of the changes in the resistance values when the band portion 11 is put on an arm. Thus, the electronic apparatus 1 can be shared among a plurality of persons like family members.

In the above-described processing, processing to convert the changes in the resistance values into a curvature may be performed. The number of users may be three or more. A user name and the like may be registered by using the sensor 20, the operation button 13, voice input, and the like. Information (e.g., exercise amount and the like) corresponding to an identified user may be read out and presented to the user. Thus, it is possible to add processing in accordance with the electronic apparatus 1 to which the sensor 20 is applied.

### [1.6 Effects]

According to the sensor according to the embodiment of the present technology, not only the above-described effects but also effects as follows can be obtained, for example.

In a case of forming a conductive layer on a holding body having a material quality with a high elongation percentage (such as sponge), a defect caused by bending tends to occur in the conductive layer connected in a planar shape. In contrast, since a conductive layer is divided, concentration of stress can be reduced and occurrence of a defect can be suppressed in the conductive layer even in a case where the holding body is largely deformed.

Additionally, in a case of defining a distance between the divided conductive portions as a slit distance at the time of dividing the conductive layer, transmittance in a magnetic field can be changed by changing a size of the slit distance. For example, influence on an antenna magnetic field for communication or the like can be controlled by changing the size of the slit distance at the time of mounting the sensor on the electronic apparatus.

Additionally, in a case where the conductive layer is not divided and connected in a planar shape, when the sensor is deformed, there is no structural flow path through which internal air can escape, and recovery delay or the like is caused after deformation of the sensor. In the present technology, since slits are formed between the respective conductive portions, it is possible to secure a flow path of the air when the sensor is largely deformed, and prevent deterioration of the sensor characteristics.

In the case of the watch-type electronic apparatus like the embodiment, operation on the electronic apparatus can be made even in a state in which the electronic apparatus is put around the arm and in a state in which the electronic apparatus is placed on a flat desk because pressing operation can be detected even when the surface on which the sensor is mounted is in a curved surface state or in a flat surface state.

In the case of the watch-type electronic apparatus like the embodiment, a tight contact state between the electronic apparatus and the arm can also be estimated because the sensor can detect not only bending but also pressure distribution.

### <2. Modified Examples>

While the embodiment of the present technology is specifically described above, the present technology is not limited to the above-described respective embodiments, and various kinds of modifications based on the technical idea of the present technology can be made. In the following, a plurality of modified examples will be described.

### [2.1 Modified Example 1]

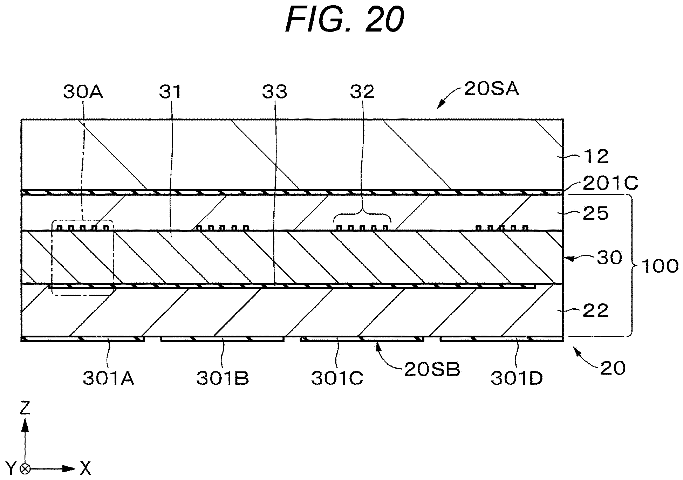

Fig. 20 is a diagram illustrating a cross section of a sensor in a modified example 1. In the embodiment, the configuration in which the sensor 20 is provided in the band portion 11 is described, but the sensor 20 may also be provided on the rear surface side of the display device 12. Thus, the position to provide the sensor 20 can be changed as appropriate.

### [2.2 Modified Example 2]

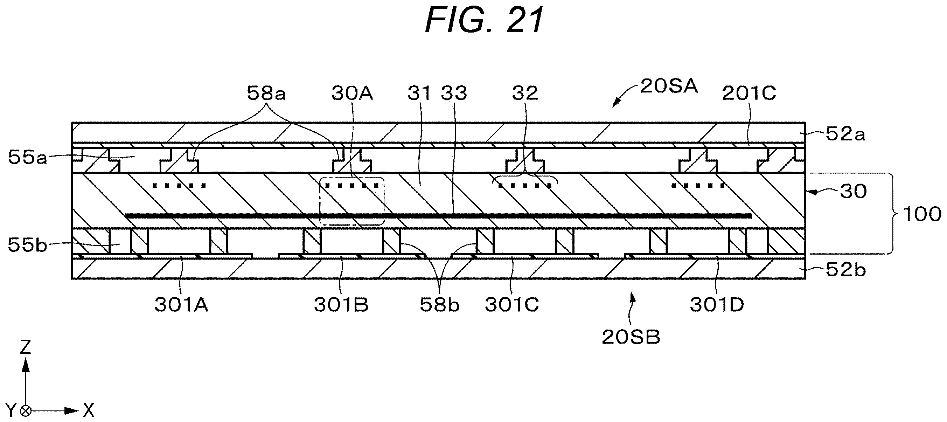

Fig. 21 is a diagram illustrating a cross section of a sensor in a modified example 2. In the sensor according to the modified example 2, the first conductive portions 201 are formed on a conductive base material 52a, and the second conductive portions 301 are formed on a conductive base material 52b. Additionally, a gap 55a is formed between the first conductive layer 200 and the multilayer body 100, and a plurality of first columnar bodies 58a that are deformable elastic bodies are provided in the gap 55a. Furthermore, a gap 55b is formed between the second conductive layer 300 and the multilayer body 100, and a plurality of second columnar bodies 58b that are deformable elastic bodies are provided in the gap 55b. In other words, the deformable layer in the sensor of the modified example 2 includes the plurality of columnar bodies. The first and second columnar bodies 58a and 58b are deformed in response to the operation surface 20SA. Thus, the sensor having the first and second columnar bodies 58a and 58b may also be applicable. The deformable layer may have only the first columnar bodies 58a or only the second columnar bodies 58b.

### [2.3 Modified Example 3]

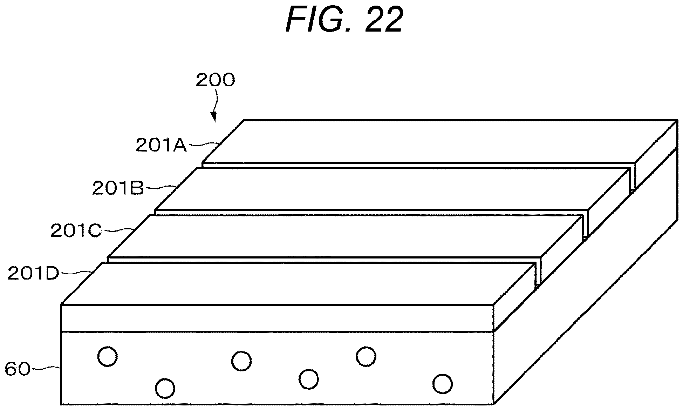

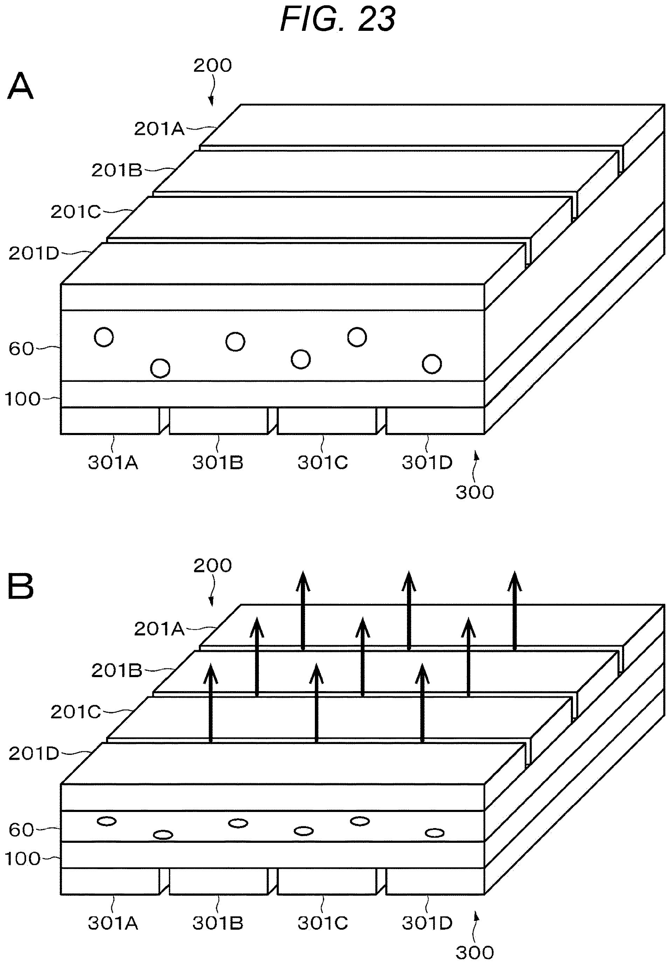

Figs. 22 and 23 are views to describe a modified example 3. As illustrated in Fig. 22, for example, the first conductive portions 201 may be formed by printing or the like on a foam body 60 including minute holes.

Fig. 23A illustrates a sensor in the modified example 3. The deformable layer in the above-described embodiment may include a foam body (foam body 60). As illustrated in Fig. 23A, the first conductive portions 201 are formed on an upper surface of the foam body 60. The second conductive portions 301 are formed on the lower surface of the multilayer body 100. When the operation surface 20SA is pressed, the foam body 60 is deformed and air corresponding to reduced volume of the foam body 60 is released from the surface of the foam body 60 as illustrated in Fig. 23B. Since this is the configuration in which the air can be released, the foam body 60 can be recovered faster, and responsiveness of the sensor can be improved.

Note that the first conductive portions 201 and the second conductive portions 301 may be formed in a foam body or only the second conductive portions 301 may be formed in a foam body.

### [2.4 Modified Example 4]

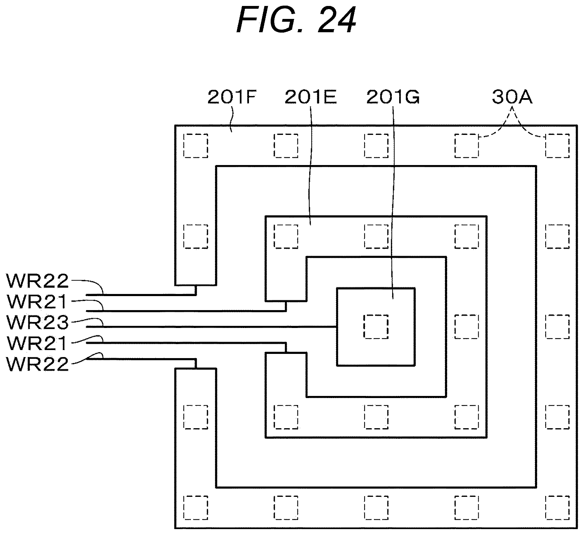

The shapes of the first conductive portions 201 and the shapes of the second conductive portions 301 are not limited to the stripe-like shapes, and various kinds of shapes can be adopted. Fig. 24 is a diagram illustrating an exemplary arrangement of the first conductive portions 201 and the sensing portions 30A in a modified example 4, for example. In Fig. 24, first conductive portions 201E, 201F, and 201G are illustrated. The first conductive portions 201E and 201F are arranged concentrically, and each has a shape of a substantially rectangular frame shape as a whole in which a part of the frame shape is not connected, and end portions thereof face each other. The conductive portion 201G has a rectangular shape arranged in a vicinity of a center of the first conductive portions 201E and 201F.

A wire WR21 is connected to each of the ends of the first conductive portion 201E. A wire WR22 is connected to each of the ends of the first conductive portion 201F. Similar to the above-described embodiment, resistance values at both ends in each of the first conductive portions 201E and 201F are measured. According to the example illustrated in Fig. 24, the number of wires can be reduced. Note that the conductive portion 201G in the example illustrated in Fig. 24 functions as a ground and is not used to measure a change in a resistance value.

Note that, in the example illustrated in Fig. 24, the second conductive portions 301 may be planar conductive portions or may have shapes similar to the shapes of the first conductive portions 201.

### [2.5 Modified Example 5]

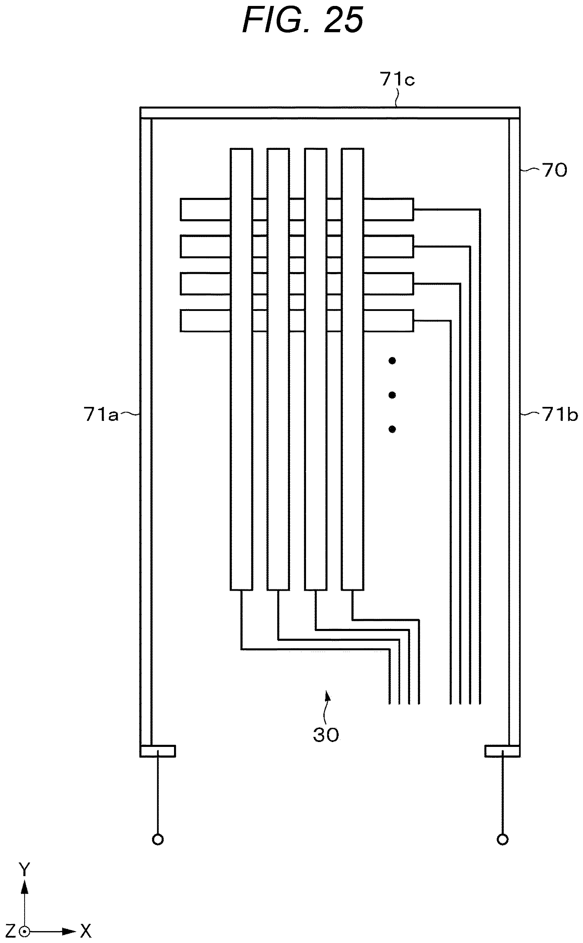

Fig. 25 is a diagram to describe a modified example 5. As illustrated in Fig. 25, there is a case of providing a shield electrode 70 that is set to the ground level in a periphery of the capacity-forming portion 30 in the above-described embodiment in order to avoid influence of external noise on the capacity-forming portion 30. The shield electrode 70 includes, for example: side portions 71a and 71b facing each other; and a side portion 71c connecting the side portions 71a and 71b. The side portions 71a and 71b are members in which resistance values are changed by bending.

Bending of the sensor can be detected by applying predetermined voltage to the shield electrode 70 and measuring a change in a resistance value of the shield electrode 70. Note that Fig. 25 is an example of detecting bending in the Y-axis direction, but it may be possible to have a configuration in which bending in the X-axis direction can be detected. For example, a shield electrode may include: the side portion 71a; the side portion 71c; and a side portion connected to the side portion 71a and facing the side portion 71c. Alternatively, the shield electrode may be provided in a vertical direction to detect bending in both of the X-axis and Y-axis directions.

### [2.6 Other Modified Examples]

In the above-described embodiment, changes in resistance values of all of the first conductive portions and changes in resistance values of all of the second conductive portions are detected, however, changes in resistance values of some of the first conductive portions and changes in resistance values of some of the second conductive portions may be detected. This can reduce a calculation amount involved in the processing. For example, some of the first conductive portions may be first conductive portions located at both ends or first conductive portions arranged at predetermined intervals. The similar is applied to the second conductive portions.

In the above-described embodiment, the configuration in which both of the first conductive layer and the second conductive layer are divided has been described, but only the first conductive layer or only the second conductive layer may be divided and the other layer may be a planar conductive layer. Additionally, the first conductive layer division pattern and the second conductive layer division pattern may be different division patterns.

The processing in the bending detection mode and the processing in the pressure distribution detection mode may be performed in parallel. In other words, the processing to detect changes in resistance values and the processing to detect pressure distribution may be performed in a state where voltage is applied to the first conductive portions 201 and the second conductive portions 301. In the case where the processing to detect pressure distribution is executed, the first conductive portions 201 and the second conductive portions 301 are not necessarily set to the ground level. Additionally, in the above-described embodiment, a bending degree may be detected from magnitude of each of changes in resistance values.

The sensor described in the embodiment may be used in combination with other sensors, and processing based on detection results of the respective sensors (for example, processing to estimate a current state of a user) may be performed. Examples of other sensors can include a biometric sensor that measures a heart rate and the like, an acceleration sensor, a temperature sensor, and a global positioning system (GPS) sensor.

The sensor may have a configuration including only one of the deformable layers (deformable layer 22, 25) described in the embodiment.

The electronic apparatus in the above-described embodiment may be a glasses-type wearable device or an accessory type wearable device such as a ring, a necklace, or an earring, instead of a watch type. Also, the electronic apparatus 1 may not necessarily be a wearable device. The sensor in the embodiment may be incorporated in electronic apparatuses such as a device for medical or industrial use, a smartphone, a computer device, a game device, a robot, an electronic book (page feed processing in response to detection of bending, for example), various input devices, a nursing device, and a mat.

More specifically, the sensor may be a glove-like sensor in which the above-described sensor is mounted on a palm side. In this case, coordinates at a contact point with a holding object and holding pressure can be detected even when a curvature of the sensor is changed at the time of holding the object. At the same time, it is also possible to grasp a current shape of the sensor, and for example, in a case of a glove type sensor, it is possible to simultaneously obtain a current three-dimensional shape of the glove, pressure applied to a surface, and information relative to coordinates of a contact position. Such a globe-like sensor can be used in application to a robot hand or the like.

The configurations, methods, processes, shapes, materials, numerical values, and the like exemplified in the above-described embodiment are merely examples, and a configuration, a method, a process, a shape, a material, a numerical value, and the like different therefrom may also be used as necessary. A configuration to achieve the above-described embodiment and modified examples may also be added as appropriate. The above-described embodiment and modified examples can be appropriately combined.

The present technology can also adopt the following configurations.
(1) A sensor including:
   a first conductive layer and a second conductive layer both being deformable and arranged to face each other; and
   a capacity-forming portion arranged between the first conductive layer and the second conductive layer and including a plurality of sensing portions,
   in which at least one of the first conductive layer or the second conductive layer is divided into a plurality of conductive portions by a predetermined conductive layer division pattern.
(2) The sensor recited in (1), in which the first conductive layer is divided into a plurality of first conductive portions by a first conductive layer division pattern, and the second conductive layer is divided into a plurality of second conductive portions by a second conductive layer division pattern.
(3) The sensor recited in (2), in which the sensing portions are arranged at intersections where the first conductive portions face the second conductive portions.
(4) The sensor recited in (2) or (3), in which a division direction by the first conductive layer division pattern is substantially orthogonal to a division direction by the second conductive layer division pattern.
(5) The sensor recited in (4), in which the first conductive layer division pattern is a pattern to divide the first conductive layer into a stripe-like shape, and the second conductive layer division pattern is a pattern to divide the second conductive layer into a stripe-like shape.
(6) The sensor recited in any one of (2) to (5), further including a drive controller to which the plurality of first conductive portions and the plurality of second conductive portions are connected.
(7) The sensor recited in (6), in which the drive controller has a first function to detect bending on the basis of changes in resistance values of the first conductive portions and changes in resistance values of the second conductive portions, and a second function to detect pressure distribution on the basis of a change in an electrostatic capacity in each of the plurality of sensing portions.
(8) The sensor recited in (7), in which the drive controller detects bending on the basis of changes in resistance values of all of the first conductive portions and changes in resistance values of all of the second conductive portions.
(9) The sensor recited in (7), in which the drive controller detects bending on the basis of changes in resistance values of some of the first conductive portions and changes in resistance values of some of the second conductive portions.
(10) The sensor recited in any one of (7) to (9), in which the drive controller can perform switching between the first function and the second function as modes.
(11) The sensor recited in any one of (7) to (10), in which the drive controller can shift a state from a standby state in which only the first function can be executed to an operative state in which the second function can be executed.
(12) The sensor recited in (11), in which the drive controller shifts the state from the standby state to the operative state in a case where a change in the resistance value exceeds a threshold value.
(13) The sensor recited in any one of (7) to (12), in which the drive controller corrects a detection result of the pressure distribution on the basis of a detection result of the bending.
(14) The sensor recited in any one of (1) to (13), in which a deformable layer is provided at least either between the first conductive layer and the capacity-forming portion or between the second conductive layer and the capacity-forming portion.
(15) The sensor recited in (14), in which the deformable layer includes a foam body.
(16) The sensor recited in (14), in which the deformable layer includes a plurality of columnar bodies.
(17) An input device including the sensor recited in any one of (1) to (16).
(18) An electronic apparatus including the sensor recited in any one of (1) to (16).
(19) The electronic apparatus recited in (18), further including a display unit,
   in which the sensor is arranged on a rear surface of the display unit.
(20) The electronic apparatus recited in (18) or (19), in which the electronic apparatus has a configuration detachable from a human body.

### REFERENCE SIGNS LIST

- 1: Electronic apparatus
- 15: Controller IC
- 30A: Sensing portion
- 40: Intersection
- 58A: First columnar body
- 58B: Second columnar body
- 60: Foam body
- 200: First conductive layer
- 201: First conductive portion
- 300: Second conductive layer
- 301: Second conductive portion

## Claims

1. A sensor comprising:
a first conductive layer and a second conductive layer both being deformable and arranged to face each other; and
a capacity-forming portion arranged between the first conductive layer and the second conductive layer and including a plurality of sensing portions,
wherein at least one of the first conductive layer or the second conductive layer is divided into a plurality of conductive portions by a predetermined conductive layer division pattern.

2. The sensor according to claim 1,
wherein the first conductive layer is divided into a plurality of first conductive portions by a first conductive layer division pattern, and the second conductive layer is divided into a plurality of second conductive portions by a second conductive layer division pattern.

3. The sensor according to claim 2,
wherein the sensing portions are arranged at intersections where the first conductive portions face the second conductive portions.

4. The sensor according to claim 2,
wherein a division direction by the first conductive layer division pattern is substantially orthogonal to a division direction by the second conductive layer division pattern.

5. The sensor according to claim 4,
wherein the first conductive layer division pattern is a pattern to divide the first conductive layer into a stripe-like shape, and the second conductive layer division pattern is a pattern to divide the second conductive layer into a stripe-like shape.

6. The sensor according to claim 2,
further comprising a drive controller to which the plurality of first conductive portions and the plurality of second conductive portions are connected.

7. The sensor according to claim 6,
wherein the drive controller has a first function to detect bending on a basis of changes in resistance values of the first conductive portions and changes in resistance values of the second conductive portions, and a second function to detect pressure distribution on a basis of a change in an electrostatic capacity in each of the plurality of sensing portions.

8. The sensor according to claim 7,
wherein the drive controller detects bending on a basis of changes in resistance values of all of the first conductive portions and changes in resistance values of all of the second conductive portions.

9. The sensor according to claim 7,
wherein the drive controller detects bending on a basis of changes in resistance values of some of the first conductive portions and changes in resistance values of some of the second conductive portions.

10. The sensor according to claim 7,
wherein the drive controller can perform switching between the first function and the second function as modes.

11. The sensor according to claim 7,
wherein the drive controller can shift a state from a standby state in which only the first function can be executed to an operative state in which the second function can be executed.

12. The sensor according to claim 11,
wherein the drive controller shifts the state from the standby state to the operative state in a case where a change in the resistance value exceeds a threshold value.

13. The sensor according to claim 7,
wherein the drive controller corrects a detection result of the pressure distribution on a basis of a detection result of the bending.

14. The sensor according to claim 1,
wherein a deformable layer is provided at least either between the first conductive layer and the capacity-forming portion or between the second conductive layer and the capacity-forming portion.

15. The sensor according to claim 14,
wherein the deformable layer includes a foam body.

16. The sensor according to claim 14,
wherein the deformable layer includes a plurality of columnar bodies.

17. An input device comprising the sensor according to claim 1.

18. An electronic apparatus comprising the sensor according to claim 1.

19. The electronic apparatus according to claim 18, further comprising a display unit,
wherein the sensor is arranged on a rear surface of the display unit.

20. The electronic apparatus according to claim 18,
wherein the electronic apparatus has a configuration detachable from a human body.
